# EUROPEAN PATENT SPECIFICATION

(11) **EP 1 785 675 B1**
(45) Date of publication and mention of the grant of the patent: **30.03.2011**
(21) Application number: 06255768.1
(22) Date of filing: 09.11.2006
(51) Int. Cl.: F24F 7/02, F24F 5/00

(54) **Ventilation arrangements**
Lüftungsanordnungen
Dispositifs de ventilation

(30) Priority: 11.11.2005 GB 0523033
(43) Date of publication of application: 16.05.2007
(73) Proprietor: Monodraught Limited, Buckinghamshire HP12 3SE (GB)
(72) Inventor: Payne, Terry Michael c/o Monodraught Limited, High Wycombe Buckinghamshire HP12 3SE (GB); Hopper, Nicholas John c/o Monodraught Limited, High Wycombe Buckinghamshire HP12 3SE (GB)
(74) Representative: Lacey, Dean Andrew

(56) References cited:
- WO-A-82/00336
- GB-A- 2 194 035
- GB-A- 2 408 321
- US-A- 3 487 767
- US-A- 5 078 047
- US-B1- 6 695 692

## Description

The present invention relates to a ventilation arrangement for ventilating a building interior.

The provision of adequate ventilation is an important consideration in building design. The combination of heat gains generated within buildings by occupants and electrical equipment and solar heat gain can cause a significant build up of heat and, therefore, overheating.

Air conditioning or other mechanical ventilation systems can be used to provide ventilation to buildings to address these difficulties. However, such systems consume electricity and can, therefore, be relatively expensive to operate.

One solution to the above problem is to provide a solar powered fan. For example, US 5,078,047 shows a ventilation system incorporating a solar powered fan to exhaust stale air from within a building. However, such known designs are not particularly efficient.

Another solution is to use a passive ventilation system. For example, WO 8200336 shows a passive ventilation system in which air is forced therethrough by the prevailing wind. However, such systems will be ineffective where the wind is below a certain speed.

According to the present invention, there is provided a ventilation arrangement for ventilating a building interior, the ventilation arrangement comprising:
first and second air duct arrangements which extend in use from roof level into an interior of a building to be ventilated to convey air between the exterior and the interior of the building;
ventilation openings arranged around the first air duct arrangement on the exterior of the building;
the second air duct arrangement extending within and through the first air duct arrangement whilst being spaced from outer walls of the first air duct arrangement, to ventilation openings on the exterior of the building;
the first air duct arrangement being divided into four duct sections extending between the upper and lower ends of the ventilation arrangement, and being arranged to direct moving air caused by wind movement through one or more of the duct sections on a windward side of the first air duct arrangement into the building interior, and to exhaust air from the interior of the building through one or more other of the duct sections on a leeward side of the first air duct arrangement;
a fan operable to convey air through the second air duct arrangement;
and a photovoltaic arrangement for providing electrical energy to the fan to operate the fan.

The fan may be operable to convey air between the exterior and interior of the building, in either direction, through the second air duct arrangement. For example, the fan may be operable to convey air from the exterior of the building to the interior of the building. Alternatively, the fan may be operable to convey air from the interior of the building to the exterior of the building.

The photovoltaic arrangement may include a photovoltaic panel, and the ventilation arrangement may include a photovoltaic panel mounting arrangement which may be arranged to mount the photovoltaic panel at an angle to the horizontal.

The ventilation arrangement may include an automatic control arrangement for controlling the operation of the fan, preferably by controlling the supply of electrical energy from the photovoltaic arrangement to the fan.

The fan may be a variable speed fan. The automatic control arrangement may be arranged to vary the rotational speed of the fan dependent upon the intensity of light incident upon the photovoltaic arrangement. Alternatively or additionally, the automatic control arrangement may be arranged to control the operation of the fan dependent upon the air temperature in the interior of the building. The automatic control arrangement may be arranged to control the rotational speed of the fan dependent upon the air temperature in the interior of the building. The automatic control arrangement may be arranged to limit the rotational speed of the fan when the temperature in the interior of the building is less than a predetermined temperature.

The ventilation arrangement may include an airflow control arrangement for controlling the flow of air in use between the exterior and the interior of a building. The airflow control arrangement may be situated at the lower end of the ventilation arrangement. The airflow control arrangement may comprise a plurality of louvred members which may be rotatable between a closed position and an open position. In the closed position, the louvred members may prevent the flow of air between the exterior and the interior of the building through the first and second air duct arrangements, and in the open position, the louvred members may permit the flow of air between the exterior and the interior of the building through the first and second air duct arrangements.

The airflow control arrangement may include an electric motor for rotating the louvred members between the closed and open positions and the ventilation arrangement may include a rechargeable battery for providing power to the electric motor. The rechargeable battery may be arranged to receive electrical energy from the photovoltaic arrangement to effect recharging. The automatic control arrangement may be arranged to control the supply of electrical energy from the photovoltaic arrangement to the rechargeable battery and may be arranged to permit the supply of electrical energy from the photovoltaic arrangement to the rechargeable battery when the fan is inoperative or when the amount of electrical energy produced by the photovoltaic arrangement is greater than the amount of electrical energy required to operate the fan.

The ventilation arrangement may include a manual control arrangement which may permit the operation of the fan and/or the airflow control means to be controlled by a user.

Embodiments of the present invention will now be described by way of example only and with reference to the accompanying drawings, in which:-
Fig. 1 is a diagrammatic cross-sectional side view of a first embodiment of a ventilation arrangement according to the present invention;
Fig. 2 is a diagrammatic view along line X-X of Fig. 1;
Fig. 3 is a diagrammatic cross-sectional side view of a second embodiment of a ventilation arrangement according to the present invention; and
Fig. 4 is a diagrammatic view along line Y-Y of Fig. 3.

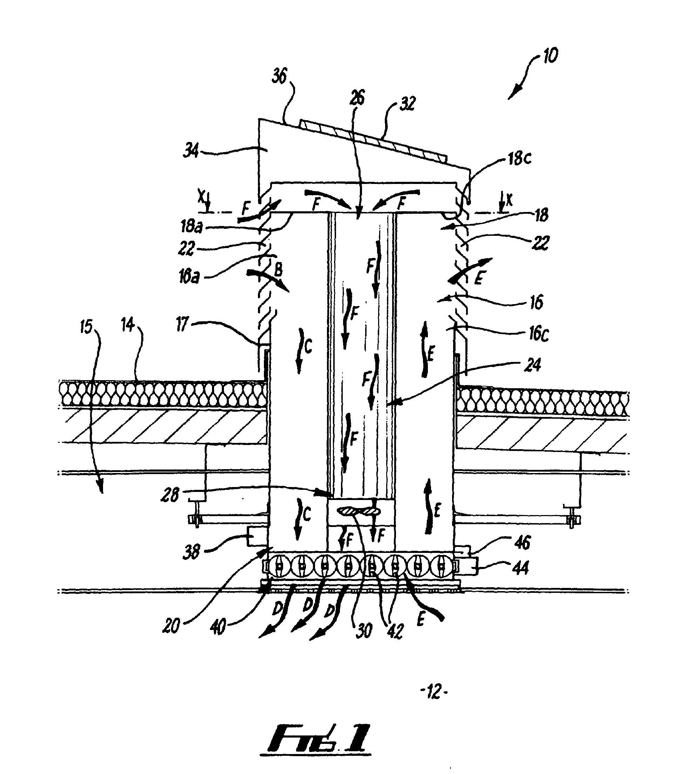

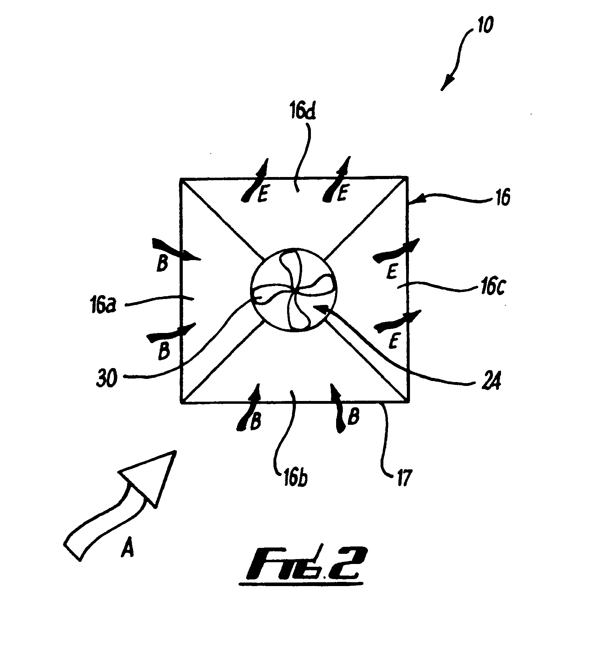

Figs. 1 and 2 show a ventilation arrangement 10 for ventilating an interior 12 of a building (not shown). The ventilation arrangement 10 is mounted on a roof 14 of the building and extends through the roof space 15 into the building interior 12.

The ventilation arrangement 10 comprises a first air duct arrangement 16 which extends from roof level through the roof space 15 into the building interior 12. The ventilation arrangement 10 comprises an outer wall 17 which is of generally square cross-section in the illustrated embodiment and includes upper and lower ends 18, 20.

The first air duct arrangement 16 is divided into four duct sections 16a-d (see Fig. 2) which are arranged to convey air between the exterior and interior 12 of the building. The outer wall 17 includes ventilation openings 22 which extend continuously around the outer wall 17. Each of the duct sections 16a-d, which is closed at its respective upper end 18a-d, is in communication with the ventilation openings 22 so that air can pass along the duct sections 16a-d between the exterior and the interior 12 of the building. The ventilation openings 22 define a portion of the side wall of each duct section 16a-d. Air can flow in either direction, into or out of the building, through the ventilation openings 22 and along the duct sections 16a-d, as will now be described.

The ventilation openings 22 capture moving air caused by the prevailing wind and direct the moving air into the duct sections 16a-d. The direction of the prevailing wind will determine into which of the duct sections 16a-d the moving air is directed. As will be clearly understood, the duct sections 16a-d which are on the windward side of the ventilation arrangement will receive air from the ventilation openings 22.

Referring to Fig. 2, the direction of the prevailing wind is indicated by the arrow A and the ventilation openings 22 therefore direct the moving air into the duct sections 16a, 16b on the windward side, as shown by the arrows B. The moving air is carried along the duct sections 16a, 16b, as shown by the arrows C, into the interior 12 of the building, as shown by the arrows D, to ventilate the interior 12.

Duct sections 16c, 16d which are on the leeward side of the ventilation arrangement 10 and which do not, therefore, carry air into the building when the prevailing wind is blowing in the direction of arrow A, carry warm stale air from the interior 12 of the building to the exterior, via the ventilation openings 22, as shown by the arrows E. This effect occurs due to the fact that the warm stale air naturally rises in an upwards direction. A constant flow of fresh air into the building interior 12 and a constant flow of stale air out of the building is thus provided as long as there is air movement caused by the prevailing wind.

In order to provide enhanced ventilation to a building, the ventilation arrangement 10 includes a second air duct arrangement 24 which is also arranged to convey air between the exterior and the interior 12 of the building. The second air duct arrangement 24 extends through the centre of the first air duct arrangement 16 and includes upper and lower ends 26, 28. The upper end 26 is in communication with the ventilation openings 22.

The ventilation arrangement 10 includes a solar powered fan 30 which is driven by a solar powered motor. A photovoltaic panel 32, which converts solar energy into electrical energy, supplies electrical energy to the fan 30 to operate it. In embodiments of the invention, the photovoltaic panel may provide a power output of between 5 and 150 watts.

In the embodiment illustrated in Fig. 1, the fan 30 is operable to convey air from the exterior of the building through the ventilation openings 22 and into the second air duct arrangement 24, as shown by the arrows F. Fresh air is thus conveyed into the building interior 12 along the second air duct arrangement 24 by the fan 30.

On days of the year when it is sufficiently windy, there will be a sufficient natural flow of fresh air into the building along the duct sections 16a-d which are on the windward side of the ventilation arrangement 10 and of stale air from the building along the duct sections 16a-d which are on the leeward side of the ventilation arrangement 10, and the ventilation arrangement 10 will thus be capable of adequately ventilating the building interior 12 without the operation of the fan 30.

During summer months when there is strong sunlight, the temperature of the building interior 12 may be greater than during cooler months of the year. During these periods, there may also be very little or no wind movement and hence little or no airflow along the duct sections 16a-d. The fan 30 can therefore be operated during such periods to provide additional, boosted, ventilation to the building interior 12. As the fan 30 will only be required to operate during hot periods when there is strong sunlight, the photovoltaic panel 32 will be able to provide the fan 30 with sufficient electrical energy to operate it.

The ventilation arrangement 10 includes a photovoltaic panel mounting arrangement 34 having a sloping mounting surface 36. When the photovoltaic panel 32 is mounted on the sloping mounting surface 36, it thus defines an angle with the horizontal plane enabling it to maximise the capture of solar energy. The ventilation arrangement 10 is mounted such that the sloping surface 36 faces in a direction due south or in a direction within a range between south east and south west.

In order to control the operation of the fan 30, the ventilation arrangement 10 includes an automatic control arrangement 38 in the form of an electronic controller. In embodiments of the invention, the automatic control arrangement 38 is operable to vary the rotational speed of the fan 30, dependent upon the intensity of light incident upon the photovoltaic panel 32, by controlling the supply of energy from the photovoltaic panel 32.

When the air temperature in the building is greater than a predetermined temperature, for example approximately 20°C, the automatic control arrangement 38 is desirably operable to vary the rotational speed of the fan 30 up to its maximum rotational speed according to the intensity of light incident upon the photovoltaic panel 32. However, when the air temperature in the building is in a range below the predetermined temperature, for example a range between approximately 17°C and 20°C, the automatic control arrangement 38 is desirably operable to limit the rotational speed of the fan 30, for example at a value of approximately 50% of its normal maximum rotational speed.

The ventilation arrangement 10 also includes an airflow control arrangement 40 for controlling the flow of air between the exterior and the interior 12 of the building, along the duct sections 16a-d and along the second air duct arrangement 24. The airflow control arrangement 40 comprises a plurality of louvred members 42 which are rotatable between an open position, shown in Fig. 1, and a closed position. In the open position, the louvred members 42 permit the flow of air from the duct sections 16a-d into or out of the building interior 12, and permit the flow of air from the second air duct arrangement 24 into the building interior 12 during operation of the fan 30. When the louvred members 42 are in the closed position (rotated through 90 degrees from the position shown in Fig. 1), they co-operate to prevent the flow of air into or out of the building interior 12.

In embodiments of the invention, the airflow control arrangement 40 includes an electric motor 44 for rotating the louvred members 42 between the open and closed positions. A rechargeable battery 46 provides power to the electric motor 46 and receives electrical energy from the photovoltaic panel 32 to maintain its charge. In order to ensure that maximum electrical energy is provided to the fan 30 during its operation, the automatic control arrangement 38 is configured such that it permits the supply of electrical energy from the photovoltaic panel 32 to the rechargeable battery 46 when the fan 30 is inoperative or when the amount of electrical energy produced by the photovoltaic panel 32 is greater than the amount of electrical energy required to operate the fan 30.

The ventilation arrangement 10 can also be provided with a manual control arrangement (not shown) to enable a user to directly control the operation of the fan 30, for example by switching it off, and/or the airflow control arrangement 40. Where the fan 30 is a variable speed fan, the fan speed may be controlled using the manual control arrangement.

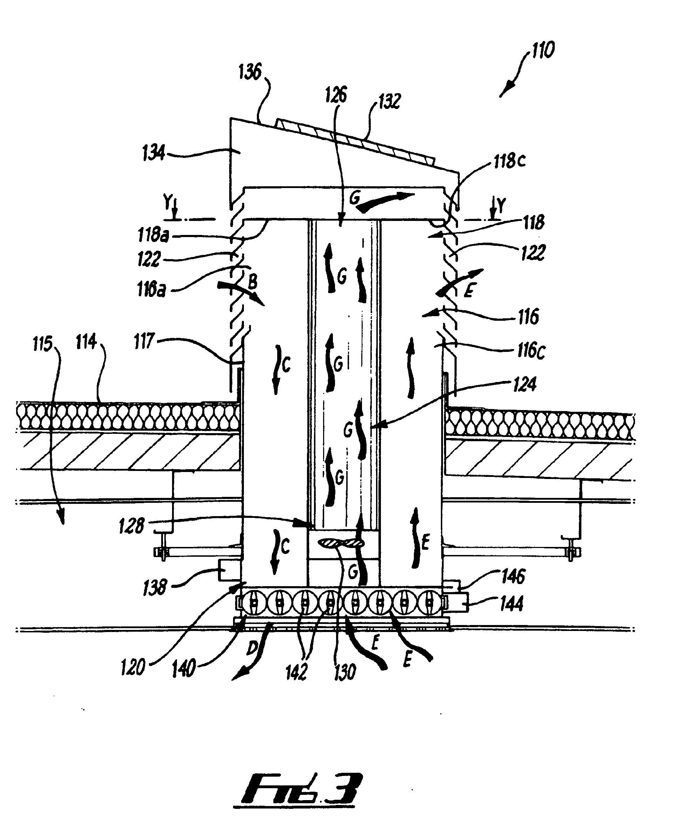

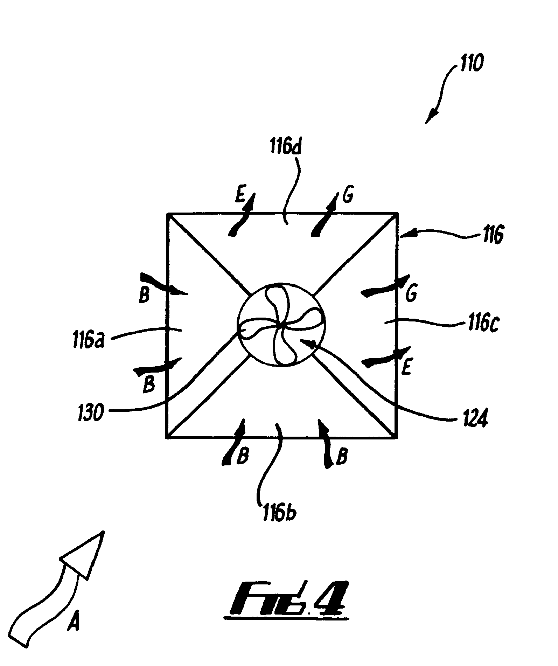

Figs. 3 and 4 show a second embodiment of a ventilation arrangement 110 for ventilating an interior 112 of a building (not shown). The ventilation arrangement 110 is identical in construction to the ventilation arrangement 10, and corresponding components are therefore given corresponding reference numerals, prefixed with the numeral '1'.

In the ventilation arrangement 110, the fan 130 is arranged so that during operation, instead of conveying fresh air into the building interior 112, it conveys stale air from the building interior 112, along the second air duct arrangement 124 and through the ventilation openings 122 to the building exterior. This is illustrated by the arrows G.

Although embodiments of the invention have been described in the preceding paragraphs with reference to various examples, it should be appreciated that various modifications to the examples given may be made without departing from the scope of the present invention defined by the claims. For example, the outer wall 17, 117 may be a shape other than square, for example it may be substantially circular in cross-section. An alternative airflow control arrangement 40, 140 may be used. The photovoltaic panel 32, 132 may have any suitable power output. The rechargeable battery 46, 146 may provide electrical energy to devices other than the electric motor 44, 144.

## Claims

1. A ventilation arrangement (10) for ventilating a building interior, the ventilation arrangement (10) comprising:
first and second air duct arrangements (16, 24) which extend in use from roof level into an interior (12) of a building to be ventilated to convey air between the exterior and the interior (12) of the building;
ventilation openings (22) arranged around the first air duct arrangement (16) on the exterior of the building;
the second air duct arrangement (24) extending within and through the first air duct arrangement (16) whilst being spaced from outer walls of the first air duct arrangement (16), to ventilation openings (22) on the exterior of the building;
the first air duct arrangement (16) being divided into four duct sections (16a - d) extending between the upper and lower ends of the ventilation arrangement (10), and being arranged to direct moving air caused by wind movement through one or more of the duct sections (16a - d) on a windward side of the first air duct arrangement (16) into the building interior, and to exhaust air from the interior of the building through one or more other of the duct sections (16a - d) on a leeward side of the first air duct arrangement (16);
a fan (30) operable to convey air through the second air duct arrangement (24);
and a photovoltaic arrangement (32) for providing electrical energy to the fan (30) to operate the fan (30).

2. A ventilation arrangement according to claim 1, wherein the fan (30) is operable to convey air from the exterior of the building to the interior (12) of the building.

3. A ventilation arrangement according to claim 1, wherein the fan (30) is operable to convey air from the interior (12) of the building to the exterior of the building.

4. A ventilation arrangement according to any of the preceding claims, wherein the photovoltaic arrangement includes a photovoltaic panel (32), and the ventilation arrangement (10) includes a photovoltaic panel mounting arrangement (34) which is arranged to mount the photovoltaic panel (32) at an angle to the horizontal.

5. A ventilation arrangement according to any of the preceding claims, wherein the ventilation arrangement (10) includes an automatic control arrangement (38) for controlling the operation of the fan (30) by controlling the supply of electrical energy from the photovoltaic arrangement to the fan (30).

6. A ventilation arrangement according to claim 5, wherein the fan (30) is a variable speed fan and the automatic control arrangement (38) is arranged to vary the rotational speed of the fan (30) dependent upon the intensity of light incident upon the photovoltaic arrangement.

7. A ventilation arrangement according to claim 5 or claim 6, wherein the automatic control arrangement (38) is arranged to control the rotational speed of the fan (30) dependent upon the air temperature in the interior (12) of the building.

8. A ventilation arrangement according to any of claims 5 to 7, wherein the automatic control arrangement (38) is arranged to limit the rotational speed of the fan (30) when the temperature in the interior (12) of the building is less than a predetermined temperature.

9. A ventilation arrangement according to any of the preceding claims, wherein the ventilation arrangement (10) includes an airflow control arrangement (40) for controlling the flow of air in use between the exterior and the interior (12) of a building.

10. A ventilation arrangement according to claim 9, wherein the airflow control arrangement (40) is situated at the lower end (20) of the ventilation arrangement (10) and comprises a plurality of louvred members (42) which are movable between a closed position and an open position.

11. A ventilation arrangement according to claim 10, wherein the airflow control arrangement (40) includes an electric motor (44) for rotating the louvred members (42) between the closed and open positions and the ventilation arrangement (10) includes a rechargeable battery (46) for providing power to the electric motor (44).

12. A ventilation arrangement according to claim 11, wherein the rechargeable battery (46) is arranged to receive electrical energy from the photovoltaic arrangement to effect recharging.

13. A ventilation arrangement according to claim 12 when dependent on at least claim 9, wherein the automatic control arrangement (38) is arranged to control the supply of electrical energy from the photovoltaic arrangement to the rechargeable battery (46).

14. A ventilation arrangement according to claim 13, wherein the automatic control arrangement (38) is arranged to permit the supply of electrical energy from the photovoltaic arrangement to the rechargeable battery (46) when the fan (30) is inoperative or when the amount of electrical energy produced by the photovoltaic arrangement is greater than the amount of electrical energy required to operate the fan (30).

15. A ventilation arrangement according to any of the preceding claims, wherein the ventilation arrangement (10) includes a manual control arrangement to permit the operation of the fan (30) and/or the airflow control arrangement (40) to be controlled by a user.

## Patentansprüche

1. Lüftungsanordnung (10) zur Innen-Belüftung eines Gebäudes, wobei die Lüftungsanordnung (10) aufweist:
eine erste und eine zweite Luftkanal-Anordnung (16, 24), die sich im Betrieb von der Höhe des Dachs ins Innere (12) eines zu belüftenden Gebäudes erstreckt, um Luft zwischen dem Äussern und dem Innern (12) des Gebäudes zu befördern;
Lüftungsöffnungen (22), die um die erste Luftkanal-Anordnung (16) herum am Äussern des Gebäudes angeordnet sind;
wobei sich die zweite Luftkanal-Anordnung (24) beabstandet von äusseren Wänden der ersten Luftkanal-Anordnung innerhalb der ersten Luftkanal-Anordnung (16) und durch diese hindurch zu Lüftungsöffnungen (22) am Äussern des Gebäudes erstreckt;
wobei die erste Luftkanal-Anordnung (16) in vier Kanalabschnitte (16a bis d) unterteilt ist, die sich zwischen dem oberen und dem unteren Ende der Lüftungsanordnung (10) erstrecken und dazu eingerichtet sind, um durch die Einwirkung von Windbewegung sich bewegende Luft durch einen oder mehrere der Kanalabschnitte (16a bis d) auf einer dem Wind zugewandten Seite der ersten Luftkanal-Anordnung (16) ins Innere des Gebäudes zu leiten und durch einen oder mehrere andere der Kanalabschnitte (16a bis d) auf einer vom Wind abgewandten Seite der ersten Luftkanal-Anordnung (16) aus dem Innern des Gebäudes auszustossen;
ein Gebläse (30), das betätigbar ist, um Luft durch die zweite Luftkanal-Anordnung (24) zu befördern; und
eine Photovoltaik-Anordnung (32) zum Bereitstellen elektrischer Energie für das Gebläse (30), um das Gebläse (30) zu betätigen.

2. Lüftungsanordnung nach Anspruch 1, **dadurch gekennzeichnet, dass** das Gebläse (30) betätigbar ist, um Luft vom Äussern des Gebäudes zum Innern (12) des Gebäudes zu befördern.

3. Lüftungsanordnung nach Anspruch 1, **dadurch gekennzeichnet, dass** das Gebläse (30) betätigbar ist, um Luft vom Innern (12) des Gebäudes zum Äussern des Gebäudes zu befördern.

4. Lüftungsanordnung nach einem der vorhergehenden Ansprüche, **dadurch gekennzeichnet, dass** die Photovoltaik-Anordnung ein Photovoltaikpaneel (32) enthält, und dass die Lüftungsanordnung (10) eine Photovoltaikpaneel-Montage-Anordnung (34) enthält, die angeordnet ist, um das Photovoltaikpaneel (32) in einem Winkel zur Horizontalen zu montieren.

5. Lüftungsanordnung nach einem der vorhergehenden Ansprüche, **dadurch gekennzeichnet, dass** die Lüftungsanordnung (10) eine Automatiksteuerung-Anordnung (38) enthält zum Steuern des Betriebs des Gebläses (30) durch Steuern der Zufuhr elektrischer Energie von der Photovoltaik-Anordnung zu dem Gebläse (30).

6. Lüftungsanordnung nach Anspruch 5, **dadurch gekennzeichnet, dass** das Gebläse (30) ein Gebläse mit variabler Drehzahl ist und dazu angeordnet ist, um die Drehgeschwindigkeit des Gebläses (30) in Abhängigleit von der Intensität des auf die Photovoltaik-Anordnung auftreffenden Lichts zu variieren.

7. Lüftungsanordnung nach Anspruch 5 oder 6, **dadurch gekennzeichnet, dass** die Automatiksteuerung-Anordnung (38) dazu angeordnet ist, um die Drehgeschwindigkeit des Gebläses (30) in Abhängigkeit von der Lufttemperatur im Innern (12) des Gebäudes zu steuern.

8. Lüftungsanordnung nach einem der Ansprüche 5 bis 7, **dadurch gekennzeichnet, dass** die Automatiksteuerung-Anordnung (38) dazu angeordnet ist, um die Drehgeschwindigkeit des Gebläses (30) zu begrenzen, wenn die Temperatur im Innern (12) des Gebäudes geringer als eine vorbestimmte Temperatur ist.

9. Lüftungsanordnung nach einem der vorhergehenden Ansprüche, **dadurch gekennzeichnet, dass** die Lüftungsanordnung (10) eine Luftströmungssteuerung-Anordnung (40) hat, um die Luftströmung im Betrieb zwischem dem Äussern und dem Innern (12) eines Gebäudes zu steuern.

10. Lüftungsanordnung nach Anspruch 9, **dadurch gekennzeichnet, dass** die Luftströmungssteuerung-Anordnung (40) sich am unteren Ende (20) der Lüftungsanordnung (10) befindet und eine Vielzahl mit Luftschlitzen versehene Glieder (42) aufweist, die zwischen einer geschlossenen Stellung und einer göffneten Stellung bewegbar sind.

11. Lüftungsanordnung nach Anspruch 10, **dadurch gekennzeichnet, dass** die Luftströmungssteuerung-Anordnung (40) einen Elektromotor (44) enthält, um die mit Luftschlitzen versehenen Glieder (42) zwischen der geschlossenen Stellung und der geöffneten Stellung zu verdrehen, und dass die Lüftungsanordnung (10) eine wiederaufladbare Batterie (46) für die Energiezufuhr zu dem Elektromotor (44) enthält.

12. Lüftungsanordnung nach Anspruch 11, **dadurch gekennzeichnet, dass** die wiederaufladbare Batterie (46) dazu eingerichtet ist, um elektrische Energie von der Photovoltaik-Anordnung aufzunehmen, um das Wiederaufladen zu bewirken.

13. Lüftungsanordnung nach Anspruch 12 und zumindest abhängig von Anspruch 9, **dadurch gekennzeichnet, dass** die Automatiksteuerung-Anordnung (38) dazu eingerichtet ist, um die Zufuhr elektrischer Energie von der Photovoltaik-Anordnung zu der wiederaufladbaren Batterie (46) zu steuern.

14. Lüftungsanordnung nach Anspruch 13, **dadurch gekennzeichnet, dass** die Automatiksteuerung-Anordnung (38) dazu angeordnet ist, um die Zufuhr elektrischer Energie von der Photovoltaik-Anordnung zu der wiederaufladbaren Batterie (46) zu gestatten, wenn das Gebläse (30) nicht in Betrieb ist oder wenn die durch die Photovoltaik-Anordnung erzeugte Menge elektrischer Energie grösser ist als die zum Betreiben des Gebläses (30) benötigte Menge elektrischer Energie.

15. Lüftungsanordnung nach einem der vorhergehenden Ansprüche, **dadurch gekennzeichnet, dass** die Lüftungsanordnung (10) eine manuelle Steuerungsanordnung (40) enthält, um das Steuern des Betriebs des Gebläses (30) und/oder der Luftströmungssteuerung-Anordnung (40) durch einen Benutzer zu ermöglichen.

## Revendications

1. Dispositif de ventilation (10) pour ventiler l'intérieur d'un bâtiment, le dispositif de ventilation (10) comprenant :
des premier et second dispositifs de conduit d'air (16, 24) qui s'étendent en service depuis un niveau de toit jusqu'à l'intérieur (12) d'un bâtiment devant être ventilé pour acheminer l'air entre l'extérieur et l'intérieur (12) du bâtiment ;
des ouvertures de ventilation (22) disposées autour du premier dispositif de conduit d'air (16) à l'extérieur du bâtiment ;
le second dispositif de conduit d'air (24) s'étendant à l'intérieur et à travers le premier dispositif de conduit d'air (16) tout en étant espacé des parois externes du premier dispositif de conduit d'air (16), jusqu'aux ouvertures de ventilation (22) à l'extérieur du bâtiment ;
le premier dispositif de conduit d'air (16) étant divisé en quatre sections de conduit (16a - d) s'étendant entre les extrémités supérieure et inférieure du dispositif de ventilation (10) et étant conçu pour diriger l'air en mouvement généré par le mouvement du vent à travers une ou plusieurs sections de conduit (16a - d) sur un côté exposé au vent du premier dispositif de conduit d'air (16) à l'intérieur du bâtiment, et pour évacuer l'air depuis l'intérieur du bâtiment à travers une ou plusieurs autres des sections de conduit (16a -d) sur un côté sous le vent du premier dispositif de conduit d'air (16) ;
un ventilateur (30) utilisable pour acheminer l'air à travers le second dispositif de conduit d'air (24) ;
et un dispositif photovoltaïque (32) pour fournir de l'énergie électrique au ventilateur (30) pour actionner le ventilateur (30).

2. Dispositif de ventilation selon la revendication 1, dans lequel le ventilateur (30) est utilisable pour acheminer l'air depuis l'extérieur du bâtiment jusqu'à l'intérieur (12) du bâtiment.

3. Dispositif de ventilation selon la revendication 1, dans lequel le ventilateur (30) est utilisable pour acheminer l'air depuis l'intérieur (12) du bâtiment jusqu'à l'extérieur du bâtiment.

4. Dispositif de ventilation selon l'une quelconque des revendications précédentes, dans lequel le dispositif photovoltaïque comprend un panneau photovoltaïque (32) et le dispositif de ventilation (10) comprend un dispositif de montage de panneau photovoltaïque (34) qui est conçu pour monter le panneau photovoltaïque (32) incliné par rapport à l'horizontale.

5. Dispositif de ventilation selon l'une quelconque des revendications précédentes, dans lequel le dispositif de ventilation (10) comprend un dispositif de commande automatique (38) pour commander le fonctionnement du ventilateur (30) en contrôlant l'alimentation en énergie électrique du dispositif photovoltaïque vers le ventilateur (30).

6. Dispositif de ventilation selon la revendication 5, dans lequel le ventilateur (30) est un ventilateur à vitesse variable et le dispositif de commande automatique (38) est conçu pour faire varier la vitesse de rotation du ventilateur (30) en fonction de l'intensité de la lumière incidente sur le dispositif photovoltaïque.

7. Dispositif de ventilation selon la revendication 5 ou la revendication 6, dans lequel le dispositif de commande automatique (38) est conçu pour contrôler la vitesse de rotation du ventilateur (30) en fonction de la température de l'air à l'intérieur (12) du bâtiment.

8. Dispositif de ventilation selon l'une quelconque des revendications 5 à 7, dans lequel le dispositif de commande automatique (38) est conçu pour limiter la vitesse de rotation du ventilateur (30) lorsque la température à l'intérieur (12) du bâtiment est inférieure à une température prédéterminée.

9. Dispositif de ventilation selon l'une quelconque des revendications précédentes, dans lequel le dispositif de ventilation (10) comprend un dispositif de contrôle du flux d'air (40) pour contrôler le flux d'air utilisé entre l'extérieur et l'intérieur (12) d'un bâtiment.

10. Dispositif de ventilation selon la revendication 9, dans lequel le dispositif de contrôle de flux d'air (40) se trouve au niveau de l'extrémité inférieure (20) du dispositif de ventilation (10) et comprend une pluralité d'éléments à lames (42) qui sont mobiles entre une position fermée et une position ouverte.

11. Dispositif de ventilation selon la revendication 10, dans lequel le dispositif de contrôle de flux d'air (40) comprend un moteur électrique (44) pour faire tourner les éléments à lames (42) entre les positions fermée et ouverte et le dispositif de ventilation (10) comprend une batterie rechargeable (46) pour fournir de l'électricité au moteur électrique (44).

12. Dispositif de ventilation selon la revendication 11, dans lequel la batterie rechargeable (46) est conçue pour recevoir l'énergie électrique provenant du dispositif photovoltaïque pour effectuer le rechargement.

13. Dispositif de ventilation selon la revendication 12, lorsqu'elle est au moins dépendante de la revendication 9, dans lequel le dispositif de commande automatique (38) est conçu pour contrôler l'alimentation en énergie électrique du dispositif photovoltaïque vers la batterie rechargeable (46).

14. Dispositif de ventilation selon la revendication 13, dans lequel le dispositif de commande automatique (38) est conçu pour permettre l'alimentation en énergie électrique du dispositif photovoltaïque vers la batterie rechargeable (46) lorsque le ventilateur (30) est inopérant ou lorsque la quantité d'énergie électrique produite par le dispositif photovoltaïque est supérieure à la quantité d'énergie électrique nécessaire pour actionner le ventilateur 30.

15. Dispositif de ventilation selon l'une quelconque des revendications précédentes, dans lequel le dispositif de ventilation (10) comprend un dispositif de contrôle manuel pour permettre le contrôle du fonctionnement du ventilateur (30) et/ou du dispositif de contrôle de flux d'air (40) par un utilisateur.
